## Europäisches Patentamt
## European Patent Office
## Office européen des brevets

(19)

(11) Publication number: **0 260 356**
**B1**

(12)

# EUROPEAN PATENT SPECIFICATION

(45) Date of publication of the patent specification:
22.08.90

(51) Int. Cl.⁵: **F16J 15/08**, F16L 23/00,
H01P 1/04

(21) Application number: **86307194.0**

(22) Date of filing: **18.09.86**

(54) Vacuum seal arrangement.

(43) Date of publication of application:
**23.03.88 Bulletin 88/12**

(45) Publication of the grant of the patent:
**22.08.90 Bulletin 90/34**

(84) Designated Contracting States:
**AT BE CH DE FR GB IT LI LU NL SE**

(56) References cited:
**DE-A- 1 450 441**
**FR-A- 1 568 488**
**US-A- 2 914 350**
**US-A- 3 201 725**
**US-A- 3 208 758**
**US-A- 4 156 307**

(73) Proprietor: **Thermionics Laboratory, Inc., P.O. Box 3711,
Hayward California 94540(US)**

(72) Inventor: **Faria, Carl F., Thermionics Laboratory, Inc.
P.O. Box 3711, Hayward California(US)**
Inventor: **Snouse, Thomas W., Thermionics Laboratory,
Inc. P.O. Box 3711, Hayward California(US)**

(74) Representative: **Cross, Rupert Edward Blount et al,
BOULT, WADE & TENNANT 27 Furnival Street, London
EC4A 1PQ(GB)**

## Description

This invention relates to a vacuum seal arrangement, and particularly to a vacuum seal arrangement comprising a pair of flange members secured together with a seal formed therebetween, as disclosed in US-A 3 208 758.

Machining the parts for an arrangement as disclosed in US-A 3 208 758 for round flange members is relatively easy; however, it has heretobefore not been economically feasible to machine such parts for noncircular flange members.

According to this invention there is provided a vacuum seal arrangement comprising a pair of opposed flange members having facing surfaces, each facing surface having an inner edge and an outer edge and being formed with an inner groove having an outer edge, an outer groove having an outer shoulder, and a slanted surface extending from the bottom of said outer groove to the top of said outer edge of said inner groove to form there a sharp corner; and a deformable gasket between said flange members and extending outward and inward of said sharp corners thereon; characterised in that said flange members are non-circular and said gasket is of substantially rectangular cross-section; and characterised by a spacer member discrete from said flange members and from said gasket in said outer groove and abutting said outer shoulder and having a thickness to hold said facing surfaces spaced apart, said spacer member confining deformation of said gasket when said flange members are drawn together to cause said gasket to seal against said sharp corners and said slanted surfaces.

Preferably the gasket is of soft metal.

The arrangement of this invention may be fabricated using ordinary machine tools (e.g. a milling machine) and ordinary tooling therefor (e.g. end mills).

The use of a spacer member which confines the gasket in its deformation so that the flow of the gasket when compressed is directed to form a very tight seal so that the arrangement may be subjected to ultra-high vacuum.

Preferably the spacer member is removable from the arrangement. Ordinarily when the spacer member is removed the gasket remains with the spacer member. Alternatively, the spacer member may be permanently secured to one of the flange members as by tack welding.

Preferably the shape of the members of the arrangement is such that when the arrangement is subjected to vacuum, no pockets of air exist. Hence, there will be no difficulty in evacuating a device in which the arrangement is incorporated.

Although the members of the arrangement may be of different materials, and hence expand and contract at different rates during the "baking" which conventionally is used in the evacuation of devices in which the arrangement is installed, such differential expansion is readily accommodated.

In some instances it is desirable to seal the flange members together only temporarily. The use of an expensive soft metal gasket for such purpose is unnecessarily expensive. In such, circumstances the gasket can be an elastomeric gasket confined on its inner edge by a support member which limits inward deformation of the elastomeric gasket.

This invention will now be described by way of example with reference to the drawings, in which:

Fig. 1 is a perspective view of a rectangular flange member used in an arrangement according to the invention;

Fig. 2 is a fragmentary exploded sectional view of the members forming an arrangement according to the invention prior to assembly;

Fig. 3 is a view similar to Fig. 2 showing the arrangement assembled;

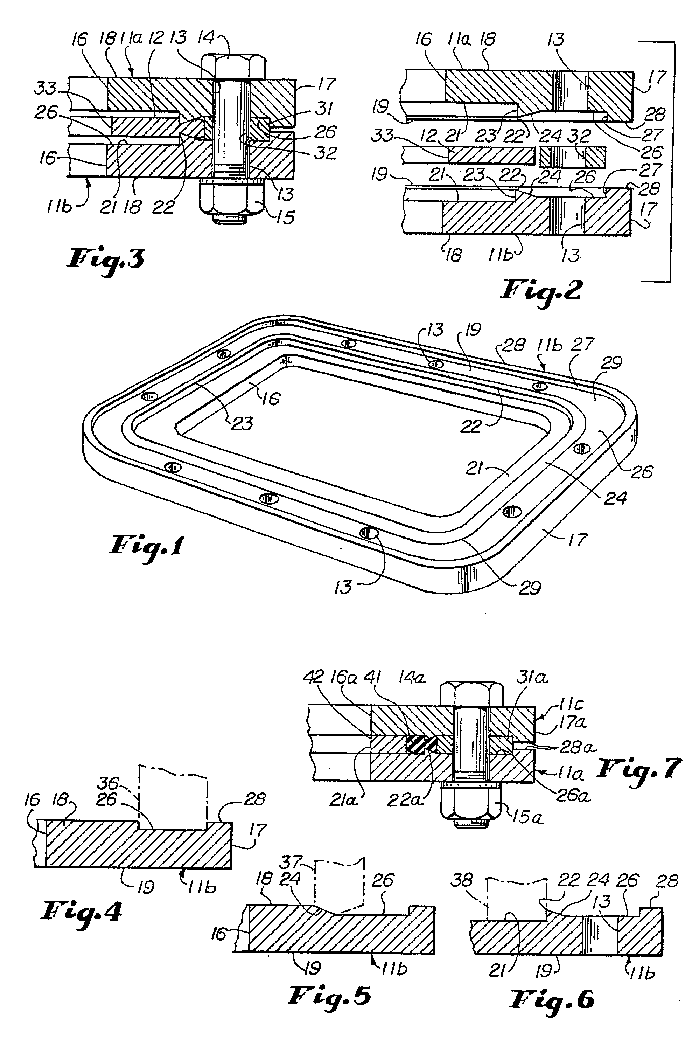

Fig. 2, 5 and 6 are schematic fragmentary sectional views illustrating steps in a method of manufacture of the flange member of Fig. 1; and

Fig. 7 is a view similar to Fig. 3 of an arrangement using an elastomeric (temporary) gasket.

The assembly of the invention comprises a top rectangular flange member 11a and a bottom flange member 11b which is substantially a duplicate of member 11a. The flange members 11a and 11b are preferably of a hard metal such as stainless steel. Partially interposed between the flange members 11a and 11b is a sealing gasket 12 of a soft metal such as copper, which is deformable under compression to effect an ultra high vacuum seal required in certain installations.

The flange members 11a and 11b are formed with bolt holes 13 to receive bolts 14, the flange members being drawn together by tightening nuts 15 on the bolts 14.

Each flange member 11a or 11b has an inner edge 16 and an outer edge 17, which edges are usually smooth. The outer surface 18 of each flange members is flat while the inner facing surface 19 is machined. An inner groove 21 is formed in surface 19, extending outward from inner edge 16. Outward of groove 21 is a sharp corner 22 formed at the intersection of side 23 of groove 21 (which is preferably perpendicular to the bottom of groove 21) and slanted outer surface 24. Outward of side 24 is outer groove 26. The angle between the bottom of the groove 26 and the surface 24 is preferably about 20 degrees. Groove 26 terminates in an outer vertical shoulder 27. The edge 28 of surface 19 is parallel to the base of groove 26 and is elevated slightly above corner 22, as clearly shown in Figure 2.

As best shown in Fig. 1, the corners 29 of the flange members are rounded, the grooves 21 and 26 and the sloping side 24 being curved at the corners 29.

The arrangement includes a spacer 31 which substantially fills groove 26 and extends above the level of raised edge 28. Spacer member 31 is also thicker than the gasket 12. The inside dimension of spacer member 31 is preferably larger than the outside dimension of gasket 12 by a small fraction, such as approximately 5mm, in the initial, unstressed, condition of the arrangement shown in Fig. 2. Spacer member 31 is formed with holes 32 aligned with the holes 13.

The members shown in Fig. 2 are assembled by first installing the spacer member 31 in groove 26 of lower flange member 11b and then installing the sealing gasket 12 inside the spacer member 31. The upper flange member 11a is then positioned above the spacer member 31 and gasket 12, and bolts 14 are inserted through the holes 13 and 32. To form the seal, nuts 15 on bolts 14 are tightened causing the sharp corners 22 to dig into the soft metal of the sealing gasket 12. The gasket 12 deforms outwardly under compression, and the inner edge of the spacer member 31 confines outward deformation of the gasket 12 causing it to seal tightly against the surfaces 24. It will be seen from Fig. 3 that the spacer member 31 limits how far the flange members 11a and 11b can be drawn together and hence prevents overstressing of the gasket 12.

As has previously been mentioned, there is no known economical way in which the cross-sectional shape of the flange member shown in US-A-3208758 can be fabricated except when the member is circular and can be made on a lathe or the like. Flange members for an arrangement according to the invention as described above can be made with conventional machine tools and tooling, as is illustrated schematically in Figs. 4 to 6. Thus, a rectangular cross-section blank for for flange member 11b initially has smooth surfaces 18 and 19 and smooth inner and outer edges 16 and 17. The first fabrication step is illustrated in Fig. 4. A milling cutter 36 having a squared-off bottom end in the mill edge is used to cut the groove 26 spaced an appropriate distance inward from edge 17. If the width of groove 26 is greater than the diameter of cutter 36, several passes of the cutter 36 may be performed. The next step in the fabrication is shown in Fig. 5. A milling tool 37 which has a bottom edge complementary to the slanted surface 24 (e.g., at an angle of, say, 20 degrees) is used immediately inside the inner edge of groove 26, thus forming the slanted surface 24. The third step in the fabrication is shown in Fig. 6. A milling cutter 38 similar to the cutter 36 is used to form the groove 21 with its inner side 23. Several passes of the cutter 38 may be used if the groove 21 is wider than the diameter of the cutter 38. Thereupon th holes 13 are bored.

Fig. 7 illustrates an arrangmenet which is particularly useful where one or more tests of the tightness of the arrangement when subjected to vacuum are required and it is undesirable to spoil a relatively expensive soft metal gasket 12. The same reference numerals as used in Figs. 1 to 6 are used in Fig. 7 to designate corresponding members, all followed by the subscript a. For such purposes, an elastomeric gasket ring 41 is used fitting about a rectangular cross-section support member 42 which is of a thickness equal to the thickness of spacer member 31a. Flange members 11c and 11d resemble flange members 11a and 11b in the arrangement of Figs. 1 to 3. After the members have been assembled, the nuts 15a are drawn tight causing the sharp corners 22a to dig into the gasket 41 and deform the same. The inner edge of the spacer member 31a and the outer edge of the support member 42 confine the deformation of the gasket 41 so that a tight seal is effected in the same manner as in the arrangement of Figs. 1 to 3. Since the gasket 41 is relatively inexpensive, it can be used once or several times and then discarded. However, for permanent installation it is desirable to use a soft metal gasket such as the gasket 12 of Figs. 2 and 3.

## Claims

1. A vacuum seal arrangement comprising a pair of opposed flange members (11a, 11b) having facing surfaces (19), each facing surface having an inner edge (16) and an outer edge (17) and being formed with an inner groove (21) having an outer edge (23), an outer groove (26) having an outer shoulder (27), and a slanted surface (24) extending from the bottom of said outer groove (26) to the top of said outer edge (23) of said inner groove (21) to form there a sharp corner (22); and a deformable gasket (12, 41) between said flange members (11a, 11b) and extending outward and inward of said sharp corners (22) thereon; characterised in that said flange members (11a, 11b) are non-circular and said gasket (12, 41) is of substantially rectangular cross-section; and characterised by a spacer member (31) discrete from said flange members (11a, 11b) and from said gasket (12, 41) in said outer groove (26) and abutting said outer shoulder (27) and having a thickness to hold said facing surfaces (19) spaced apart, said spacer member (31) confining deformation of said gasket (12, 41) when said flange members (11a, 11b) are drawn together to cause said gasket (12, 41) to seal against said sharp corners (22) and said slanted surfaces (24).

2. An arrangement as claimed in Claim 1, characterised in that said spacer member (31) and said flange members (11a, 11b) are formed with aligned holes (27, 13) which receive fastening means (14, 15) operative to draw said flange members (11a, 11b) toward each other.

3. An arrangement as claimed in Claim 1 or Claim 2, characterised in that the gasket (12) is a soft metal gasket (12).

4. An arrangement as claimed in Claim 1 or Claim 2, characterised in that the gasket (41) is of elastomeric material and is fitted about a support member (42) having a thickness equal to that of the spacer member (31).

5. An arrangement as claimed in any preceding claim, characterised in that said spacer member (31) is removable from said outer grooves (26).

6. An arrangement as claimed in any preceding claim, characterised in that the flange members (11a, 11b) have been produced by milling operations.

7. A method of manufacturing a flange member for use in an arrangement as claimed in any preceding claim, characterised by the sequential steps of providing a blank with a flat facing surface; milling said facing surface to form said outer groove (26); milling said slanted surface (24); and milling said inner groove (21) to simultaneously form said sharp corner (22).

8. A method as claimed in Claim 7, characterised by the step of forming bolt holes (13) through the bottom of said outer groove (26).

## Patentansprüche

1. Vakuumdichtungsanordnung mit einem Paar gegenüberliegender Flanschelemente (11a, 11b), welche einander zugewandte Oberflächen (19) haben, wobei jede zugewandte Oberfläche einen Innenrand (16) und einen Außenrand (17) aufweist und mit einer einen äußeren Rand (23) aufweisenden inneren Nut (21), einer eine Außenschulter (27) aufweisenden äußeren Nut (26) und einer abgeschrägten Oberfläche (24) versehen ist, die sich vom Boden der äußeren Nut (26) zur Oberseite des äußeren Randes (23) der inneren Nut (21) erstreckt, um dort eine scharfe Kante (22) zu bilden, und mit einer verformbaren Dichtung (12, 41) zwischen den Flanschelementen (11a, 11b), die sich außerhalb und innerhalb der scharfen Kanten (22) darauf erstreckt, dadurch gekennzeichnet, daß die Flanschelemente (11a, 11b) nicht kreisförmig sind und daß die Dichtung (12, 41) einen im wesentlichen rechteckigen Querschnitt hat, und gekennzeichnet durch ein Distanzstück (31), das von den Flanschelementen (11a, 11b) und der Dichtung (12, 41) der äußeren Nut (26) getrennt ist, an der Außenschulter (27) anliegt, an eine für das auf Abstand Halten der zugewandten Oberflächen (19) entsprechende Dicke hat und eine Verformung der Dichtung (12, 41) begrenzt, wenn die Flanschelemente (11a, 11b) gegeneinandergezogen werden, um die Dichtung (12, 41) zum Abdichten an den scharfen Kanten (22) und den schrägen Oberflächen (24) zu veranlassen.

2. Anordnung nach Anspruch 1, dadurch gekennzeichnet, daß das Distanzstück (31) und die Flanschelemente (11a, 11b) mit fluchtend ausgerichteten Löchern (27, 13) versehen sind, welche Befestigungseinrichtungen (14, 15) aufnehmen, die so wirken, daß die Flanschelemente (11a, 11b) aufeinander zu gezogen werden.

3. Anordnung nach Anspruch 1 oder Anspruch 2, dadurch gekennzeichnet, daß die Dichtung (12) eine weiche Metalldichtung (12) ist.

4. Anordnung nach Anspruch 1 oder Anspruch 2, dadurch gekennzeichnet, daß die Dichtung (41) aus elastomerem Material besteht und um ein Trägerelement (42) herum eingepaßt ist, das eine Dicke hat, die zu der des Distanzstücks (31) gleich ist.

5 Anordnung nach einem vorhergehenden Anspruch, dadurch gekennzeichnet, daß das Distanzstück (31) aus den äußeren Nuten (26) entfernbar ist.

6. Anordnung nach einem vorhergehenden Anspruch, dadurch gekennzeichnet, daß die Flanschelemente (11a, 11b) durch Fräsarbeitsgänge hergestellt worden sind.

7. Verfahren zur Herstellung eines Flanschelements zur Verwendung in einer Anordnung nach einem vorhergehenden Anspruch, gekennzeichnet durch die aufeinanderfolgenden Schritte, nämlich Vorsehen eines Rohlings mit einer ebenen zugewandten Oberfläche, Fräsen der zugewandten Oberfläche zur Bildung der äußeren Nut (26), Fräsen der schrägen Oberfläche (24) und Fräsen der inneren Nut (21), um gleichzeitig die scharfe Kante (22) zu bilden.

8. Verfahren nach Anspruch 7, gekennzeichnet durch den Schritt, nämlich Ausbilden von Bolzenlöchern (13) durch den Boden der äußeren Nut (26).

## Revendications

1. Dispositif d'étanchéité au vide comprenant deux éléments à brides opposés (11a, 11b) présentant des surfaces (19) en vis-à-vis, chacune des surfaces en vis-à-vis ayant un bord intérieur (16) et un bord extérieur (17) et étant formée de façon à présenter une gorge intérieure (21) ayant un bord extérieur (23), une gorge extérieure (26) ayant un épaulement extérieur (27), et une surface inclinée (24) s'étendant du fond de ladite gorge extérieure (26) jusqu'au sommet dudit bord extérieur (23) de ladite gorge intérieure (21) pour y former une arête vive (22); et une garniture déformable (12, 41) entre lesdits éléments à brides (11a, 11b) et s'étendant vers l'extérieur et vers l'intérieur desdites arêtes vives (22) qu'ils présentent; caractérisé en ce que lesdits éléments à brides (11a, 11b) ne sont pas circulaires et ladite garniture (12, 41) est d'une section transversale sensiblement rectangulaire; et caractérisé par un élément d'entretoisement (31) physiquement distinct desdits éléments à brides (11a, 11b) et de ladite garniture (12, 41) dans ladite gorge extérieure (26), butant contre ledit épaulement extérieur (27) et ayant une épaisseur telle qu'il maintient lesdites surfaces en vis-à-vis (19) espacées l'une de l'autre, ledit élément d'entretoisement (31) limitant la déformation de ladite garniture (12, 41) lorsque lesdits éléments à brides (11a, 11b) sont tirés l'un contre l'autre pour amener ladite garniture (12, 41) à s'appliquer de façon étanche contre lesdites arêtes vives (22) et lesdites surfaces inclinées (24).

2. Dispositif selon la revendication 1, caractérisé en ce que ledit élément d'entretoisement (31) et lesdits éléments à brides (11a, 11b) sont formés de façon à présenter des trous alignés (27, 13) qui reçoivent des moyens de fixation (14, 15) agissant en tirant lesdits éléments à brides (11a, 11b) l'un vers l'autre.

3. Dispositif selon la revendication 1 ou la revendication 2, caractérisé en ce que la garniture (12) est une garniture (12) en métal doux.

4. Dispositif selon la revendication 1 ou la revendication 2, caractérisé en ce que la garniture (41) est en une matière élastomérique et est montée autour d'un élément (42) de support ayant une épaisseur égale à celle de l'élément d'entretoisement (31).

5. Dispositif selon l'une quelconque des revendications précédentes, caractérisé en ce que ledit élément d'entretoisement (31) peut être retiré desdites gorges extérieures (26).

6. Dispositif selon l'une quelconque des revendications précédentes, caractérisé en ce que les éléments à brides (11a, 11b) ont été produits par des opérations de fraisage.

7. Procédé de fabrication d'un élément à bride à utiliser dans un dispositif selon l'une quelconque des revendications précédentes, caractérisé par les étapes successives qui consistent à utiliser une ébauche présentant une surface frontale plane; à fraiser ladite surface frontale pour former ladite gorge extérieure (26); à réaliser par fraisage ladite surface inclinée (24); et à réaliser par fraisage ladite gorge intérieure (21) pour former simultanément ladite arête vive (22).

8. Procédé selon la revendication 7, caractérisé par l'étape qui consiste à former des trous (13) de boulons à travers le fond de ladite gorge extérieure (26).

Fig.3

Fig.2

Fig.1

Fig.7

Fig.4

Fig.5

Fig.6